# EUROPÄISCHE PATENTSCHRIFT

(11) **EP 0 639 594 B1**
(45) Veröffentlichungstag und Bekanntmachung des Hinweises auf die Patenterteilung: **29.12.1997**
(21) Anmeldenummer: 94112172.5
(22) Anmeldetag: 04.08.1994
(51) Int. Cl.: C08G 18/08

(54) **Verfahren zur Herstellung von wässrigen Überzugsmitteln, die Überzugsmittel und deren Verwendung**
Process for the preparation of aqueous coatings, coatings and their use
Procédé de préparation de revêtements aqueux, les revêtements et leurs utilisation

(30) Priorität: 09.08.1993 DE 4326670
(43) Veröffentlichungstag der Anmeldung: 22.02.1995
(73) Patentinhaber: Herberts Gesellschaft mit beschränkter Haftung, 42285 Wuppertal (DE)
(72) Erfinder: Schwan, Heinrich Dr., D-42287 Wuppertal (DE); Patzschke, Hans-Peter Dr., D-42279 Wuppertal (DE); Gol, Franjo Dr., D-51373 Leverkusen (DE)
(74) Vertreter: Türk, Gille, Hrabal, Leifert

(56) Entgegenhaltungen:
- EP-A- 0 000 171
- EP-A- 0 498 218
- EP-A- 0 543 228
- EP-A- 0 546 375

## Beschreibung

Die Erfindung betrifft die Herstellung von Überzugsmitteln auf der Basis von wäßrigen Bindemitteldispersionen und darin dispergierten bzw. einemulgierten Isocyanatvernetzern, sowie die erhaltenen Überzugsmittel. Die Überzugsmittel können in der Lackindustrie, insbesondere bei der Herstellung von Mehrschichtlackierungen, beispielsweise auf dem Kraftfahrzeugsektor, Verwendung finden.

Zweikomponenten(2K)-Polyurethanüberzugsmittel sind in der Literatur weit verbreitet. Sie haben ihre besonderen Vorteile in der Praxis schon gezeigt. Während sie früher auf Basis organischer Lösemittel hergestellt wurden, sind neuere Überzugsmittel auf Basis von 2K-Isocyanatsystemen auch als wäßrige Überzugsmittel beschrieben.

In der EP-A-0 546 375 werden wäßrige Überzugsmittel beschrieben, ohne daß eine Mischung aus zwei Aminen zur Neutralisation verwendet wird.

So werden in der EP-A-0 358 979 wäßrige 2K-Überzugsmittel beschrieben, die aus einer Polyolkomponente auf Basis von Polymeren aus ungesättigten monomeren Verbindungen und einer Polyisocyanatkomponente mit einer speziellen Viskosität bestehen. Dabei soll die Polyisocyanatkomponente in die Polyolkomponente einemulgiert werden.

In der EP-A-0 496 205 werden wäßrige 2K-Überzugsmittel beschrieben, die auf Basis von wäßrigen Polyesterkomponenten formuliert sind, die mindestens Urethan-, Carboxylat- und Hydroxylgruppen aufweisen, sowie von Polyisocyanatkomponenten mit einer speziellen Viskosität, die direkt vor der Herstellung in der Polyesterkomponente emulgiert werden. Bei den beschriebenen Überzugsmitteln werden schnell reagierende Isocyanatkomponenten eingesetzt. Diese reagieren beim Einemulgieren in die wäßrige Phase, mit dem im großen Überschuß vorliegenden Wasser. Das führt zu einem schwer vorhersehbaren Umsatz der Komponenten miteinander. Ebenso wird eine nicht festgelegte Menge des Isocyanats schon vor der Vernetzungsreaktion für Nebenreaktionen verbraucht. Die dort beschriebenen Überzugsmittel weisen also den Nachteil unterschiedlicher Anteile an Vernetzungsstellen und damit einer schlechten Reproduzierbarkeit auf.

In der DE-A-35 29 249 wird beschrieben, daß man in wäßrigen Kunststoffdispersionen Polyisocyanate zur Veränderung der Eigenschaften zusetzen kann. Bei diesen Kunststoffen handelt es sich jedoch nicht um Polyhydroxylverbindungen, die zu üblichen Polyurethanen führen, sondern um inerte gegebenenfalls feste Kunststoffe. Ein Nachteil der dort beschriebenen Überzugsmittel ist die fehlende Vernetzung. Diese ist besonders in der Lackindustrie notwendig, um die geforderten Eigenschaften zu erzielen. Außerdem liegen die im wesentlichen fest vorliegenden Teilchen in einer für die Lackverwendung ungeeigneten Form vor, da sie bei Systemen, die bei niedriger Temperatur vernetzen, nicht ausreichend verfließen können und so keine homogene Oberfläche erzeugen.

In der EP-A-0 505 889 werden wäßrige Dispersionen von verkapselten Isocyanaten beschrieben. Diese werden hergestellt durch Dispergieren von Polyisocyanaten in Wasser sowie Zugeben von Polyaminen mit mehreren reaktiven Aminogruppen, so daß durch Reaktion eine dichte Umhüllung der Isocyanattröpfchen mit einer Harnstoffhülle entsteht. Diese im wesentlichen stabilen Isocyanatdispersionen können nach Zerstörung der Harnstoffhülle um die Polyisocyanattröpfchen zu weiteren Reaktionen führen. Die unter Verwendung dieser Polyisocyanatdispersionen hergestellten Überzugsmittel führen zu Überzügen, die eine unerwünschte Wasserempfindlichkeit aufweisen.

Aufgabe der Erfindung ist die Bereitstellung von Überzugsmitteln, die bei ausreichender Verarbeitungszeit zu einer raschen Vernetzungsreaktion führen und blasenfreie Filme mit verbesserten Eigenschaften, wie höherer Wasserbeständigkeit, insbesondere beim Spritzen unter Erzielung hoher Schichtdicken, ergeben.

Es hat sich gezeigt, daß diese Aufgabe gelöst werden kann durch Bereitstellung eines wäßrigen Überzugsmittels, das hergestellt wird durch Vermischen einer speziellen wäßrigen Dispersion eines oder mehrerer wasserdispergierbarer oder wasserlöslicher Bindemittel die gegenüber Isocyanat reaktive Gruppen enthalten, mit einem oder mehreren flüssigen oder durch Zusatz eines oder mehrerer organischer Lösemittel in flüssiger Form vorliegenden Polyisocyanaten, sowie gegebenenfalls Pigmenten, Füllstoffen und/oder lacküblichen Additiven. Dieses Verfahren ist dadurch gekennzeichnet, daß man eine wäßrige Dispersion oder Lösung eines oder mehrerer Bindemittel mit einem Zahlenmittel der Molmasse (Mn) von 1000 bis 100000, mit einem Gehalt an gegenüber Isocyanat reaktiven Gruppen, berechnet als OH-Zahl von 20 bis 250 und mit einer Säurezahl von 10 bis 100, deren Säurefunktionen zumindest teilweise durch ein oder mehrere Polyamine mit primären und/oder sekundären Aminogruppen im Gemisch mit einem oder mehreren tertiären Monoaminen, neutralisiert sind, verwendet, und daß man das oder die flüssigen oder in flüssiger Form vorliegenden Polyisocyanate in dieser wäßrigen Dispersion kurz vor der Verarbeitung des Überzugsmittels dispergiert.

Die wasserdispergierbaren oder wasserlöslichen Bindemittel, die erfindungsgemäß einsetzbar sind, enthalten gegenüber Isocyanaten reaktive Gruppen, beispielsweise OH-Gruppen, SH-Gruppen und/oder CH-acide Gruppen, bevorzugt OH-Gruppen.

Die flüssigen oder durch Zusatz eines oder mehrerer organischer Lösemittel verflüssigten Polyisocyanate haben vorzugsweise eine Viskosität kleiner als 10000 mPa.s.

Die eingesetzten Bindemittel liegen in zumindest teilweise neutralisierter Form vor; bevorzugt sind mindestens 40 %, besonders bevorzugt mindestens 50 % der sauren Funktionen neutralisiert.

Bei dem erfindungsgemäßen Überzugsmittel handelt es sich um ein Zweikomponenten-(2K)-Überzugsmittel; die Bindemittelkomponente A) und die Polyisocyanatkomponente B) werden daher kurz vor der Applikation miteinander vermischt, z.B. bis zu 2 Stunden vorher.

Es hat sich gezeigt, daß die nach dem erfindungsgemäßen Verfahren hergestellten Überzugsmittel eine gute Applikationsfähigkeit aufweisen. Ihre Topfzeit, d.h. die Zeit zwischen dem Vermischen der Komponenten und dem Verbleiben im verarbeitungsfähigen Zustand ist hoch. Ihre Vernetzungseigenschaften sind reproduzierbar. Die Überzugsmittel führen zu wasserbeständigen Überzügen. Selbst beim Spritzen in hohen Schichtdicken in mehreren Spritzgängen sind die erzielten Überzüge blasenfrei.

Als Bindemittelkomponente A) können beispielsweise übliche wasserlösliche oder wasserdispergierbare Bindemittel eingesetzt werden, wie sie für Zweikomponenten-(2K)-Überzugsmittel, z.B. 2K-Lacke geläufig sind und beschrieben werden. Beispielsweise können solche Bindemittel verwendet werden, wie sie in der DE-A-42 26 243, EP-A-0 496 205, DE-A-26 24 442, EP-A-0 469 389, EP-A-0 496 205 und EP-A-0 358 979 beschrieben werden. Es handelt sich dabei um die üblichen wasserdispergierbaren Bindemittel auf Basis von Polyacrylatharzen, Polyesterharzen, Polyurethanharzen oder (meth)acrylierten Polyesterharzen oder Polyurethanharzen, die über anionische und gegebenenfalls zusätzliche hydrophile Gruppen in der Wasserphase dispergierbar sind. Bei den hydrophilen Gruppen kann es sich z.B. um Polyetherstrukturen und/oder Polyhydroxylgruppen handeln. Die anionischen Gruppen werden durch Neutralisation saurer Gruppen, z.B. von Carboxylgruppen oder Sulfonsäuregruppen gebildet. Letztere dienen nach Neutralisation zur ionischen Stabilisierung der Bindemittel in der Wasserphase. Weiterhin enthalten die erfindungsgemäß einsetzbaren Bindemittel funktionelle Gruppen, die mit Isocyanaten reagieren können. Dabei handelt es sich insbesondere um NH-, OH-, SH- oder CH-acide Gruppen, die am Polymergerüst einreagiert sind. Über diese Gruppen ist eine Vernetzung mit Isocyanatgruppen möglich.

Das Molekulargewicht der Bindemittel kann stark variieren. Beispielsweise kann das Zahlenmittel (Mn) 1000 bis 100000 betragen, bevorzugt 3000 bis 30000. Die Bindemittel können linear oder verzweigt aufgebaut sein. Sie können auch unterschiedliche Substituenten tragen. Die Bindemittel müssen Zentren aufweisen, die mit Isocyanatgruppen reagieren können. Beispielsweise sind das Substituenten, die reaktive Wasserstoffatome tragen. Beispiele dafür sind OH-Gruppen, SH-Gruppen und/oder CH-acide Gruppen.

Geeignete ölfreie, anionische Polyester werden z.B. nach bekannten ein- oder oder mehrstufigen Verfahren mittels aceotroper Polykondensation oder Verestern in der Schmelze (z.B. bei Reaktionstemperaturen von 140 bis 240°C) aus Polyalkoholen und Polycarbonsäuren hergestellt, wobei die Mengenverhältnisse so ausgewählt werden, daß das Equivalentverhältnis von Hydroxylgruppen zu Carboxylgruppen größer als 1 ist. Die Hydroxylzahl liegt im üblichen Bereich zwischen 10 und 200. Geeignete Polycarbonsäuren enthalten beispielsweise zwei oder mehr Carboxylgruppen an einem linearen oder verzweigten aliphatischen oder aromatischen Kohlenwasserstoffgerüst mit beispielsweise 4 bis 36 Kohlenstoffatomen. Einsetzbar sind auch die veresterungsfähigen Derivate der Polycarbonsäuren wie Anhydride oder Methylester oder hydroxylgruppenhaltige Carbonsäuren und sterisch gehinderte Carboxylgruppen. Bevorzugte Polyalkohole sind aliphatische, cycloaliphatische und araliphatische Alkohole mit zwei bis sechs, vorzugsweise zwei bis vier, primären, sekundären und/oder tertiären Hydroxylgruppen und 2 bis 24 Kohlenstoffatomen pro Molekül. Die linearen oder substituierten Kohlenstoffketten können durch Ether- oder Estergruppen unterbrochen sein.

Geeignete anionische Polyacrylatharze werden nach bekannten Verfahren, beispielsweise durch radikalische Copolymerisation in Lösung, z.B. bei Temperaturen von 80 bis 140°C, oder durch Emulsionspolymerisation, z.B. bei Temperaturen von 30 bis 95°C, unter Zusatz von Initiatoren hergestellt. Als reaktive, ungesättigte Monomere dienen hydroxylgruppenenthaltende Monomere, wie beispielsweise Hydroxylalkyl(meth)acrylester oder - amide in Kombination mit Styrol oder Styrolderivaten und/oder Methacryl- und/oder Acrylsäureestern verschiedener Kettenlänge. Das Bindemittel soll reaktive Hydroxylgruppen entsprechend einer Hydroxylzahl von 10 bis 300 enthalten. Weiterhin enthält das Bindemittelmolekül ionische Gruppen oder in ionische Gruppen überführbare Substituenten, die durch entsprechend substituierte Monomere, bevorzugt Acryl- und Methacrylsäure eingeführt werden. Es können auch Anteile von ungesättigten Monomeren, die Polyethylenoxidgruppen enthalten, mit einpolymerisiert werden. Nach Herstellung der wäßrigen Dispersion werden die zur Abführung der Wärme verwendeten organischen Lösemittel weitgehend abdestilliert.

Geeignete anionische Polyurethanharze werden nach bekannten Verfahren durch ein- oder mehrstufige Reaktionen von Polyolen mit Polyisocyanaten z.B. bei Temperaturen von 80 bis 150°C hergestellt, wobei die Mengenverhältnisse so ausgewählt werden, daß das Equivalentverhältnis von Hydroxylgruppen zu Isocyanatgruppen größer als 1 ist. Die Hydroxylzahl liegt bevorzugt zwischen 25 und 250. Als Polyalkohole können Pentaerythrit, Dipentaerythrit, Trimethylolpropan, Di-Trimethylolpropan und/oder Glycerin eingesetzt werden, die entweder mit gesättigten oder ungesättigten, aliphatischen und/oder aromatischen Monocarbonsäuren, speziell Fettsäuren, und/oder durch Anteile von höhermolekularen Polyether-, Polyester-, Polycarbonat-, Polyesterimid-, Polyamido- und/oder Polyacrylat-Diolen modifiziert sind. Die Einführung der für die Neutralisation notwendigen Carboxylgruppen erfolgt durch Einbau von Polycarbonsäuren wie Trimellithsäureanhydrid oder von Dialkanolalkansäuren wie Dimethylolpropionsäure oder Dimethylolbuttersäure. Durch geeignete OH oder NCO-Monomere können auch nicht-ionische hydrophile Polyethylenoxidgruppen eingeführt werden.

Die beispielsweise aufgeführten Harztypen können zusätzlich mit Polyethylenoxidmonoether modifiziert oder als Mischungen verwendet werden. Die beschriebenen OH-gruppenhaltigen Polymere können gegebenenfalls Modifizierungsreaktionen unterzogen werden, um, falls dies gewünscht wird, eine Kettenverlängerung, einen Molekulargewichtsaufbau bzw. eine Modifikation mit monofunktionellen Substanzen durchzuführen. Hierzu dienen Umsetzungen, die unter Urethanbildung ablaufen, z.B. mit Mono- oder Polyisocyanaten unter Urethanbildung oder die Copolymerisation mit ungesättigten Monomeren. Es kann dabei durch Pfropf- bzw. Kondensationsreaktion eine Kettenverlängerung bzw. ein gezielter Molekulargewichtsaufbau durchgeführt werden. Die Copolymerisation kann dabei sowohl in organischer Lösung als auch bevorzugt nach dem Dispergieren in wäßriger Lösung bzw. Emulsion erfolgen. Es entstehen dabei beispielsweise acrylierte Polyester oder acrylierte Polyurethanharzdispersionen.

Die erfindungsgemäß einsetzbaren Bindemittel enthalten in anionische Gruppen überführbare Substituenten. Besonders bevorzugt als saure Gruppen sind Carboxylgruppen. Die Säurezahl der Bindemittel liegt bei 10 bis 100, insbesondere über 15, besonders über 20 und über 25 und bevorzugt unter 60, besonders unter 50. Die Bindemittelharze sind nach Überführung mindestens eines Teils der Gruppen in die ionische Form in der Wasserphase dispergierbar bzw. löslich.

Erfindungsgemäß werden die Bindemittel mit Polyaminen mit mindestens zwei primären und/oder sekundären Aminogruppen, z.B. mit Diaminen, neutralisiert. Diese Polyamine werden in Kombination mit mindestens einem tertiären Monoamin eingesetzt. Die Polyamine werden bevorzugt in einer Menge von 5 bis 25 mEqu und die tertiären Monoamine bevorzugt in einer Menge von 10 bis 45 mEqu, jeweils bezogen auf 100 g Harzfestkörper der Bindemittel, eingesetzt. Bevorzugt liegt die absolute Menge der mEqu der tertiären Monoamine über der der Polyamine. Gemäß einer weiteren bevorzugten Ausführungsform beträgt das Equivalentverhältnis von tertiären Monoaminen zu Polyaminen 2 : 1 bis 6 : 1 bei Neutralisationsgraden der Bindemittelharze von 50 bis 100 %. Das Amingemisch wird in solcher Menge und so abgestimmt zugegeben, daß die Neutralisation zur ausreichenden Stabilisation der Bindemittel gegeben ist. Wenn, wie vorstehend erwähnt, die Bindemittelharze mit Polyethylenoxidmonoether modifiziert sind, so können die Mengen an tertiärem Monoamin bzw. Salzgruppen stark reduziert werden.

Bei den Polyaminen handelt es sich bevorzugt um niedermolekulare Amine, z.B. mit einer Molmasse kleiner als 500. Geeignet Beispiele sind Ethylendiamin, 1,2- und 1,3-Propandiamin, 1,4-Butandiamin, 2-Methyl-pentandiamin, Hexandiamin-1,6, 3-Amino-1-methyl-amino-propan, N-Methyl-dipropylentriamin, 3-Amino-1-cyclohexylaminopropan, N,N'-Dimethylethylendiamin, 2,2-Dimethyl-1,3-propandiamin, 1-Amino-3-amino-3,5,5-trimethylcyclohexan (Isophorondiamin), 1,2- und 1,4-Cyclohexandiamin, 4,4'-Diamino-dicyclohexyl-methan, 3,3-dimethyl-4,4'-diaminodicyclohexylamin, Piperazin, 2,5-Dimethylpiperazin, N,N'-Bis-(2-aminoethyl)-piperazin, p-, m- oder o-Phenylendiamin, 4,4'-Diaminodiphenylmethan, Polyoxypropylenamine wie 4,9-Dioxadodecan-1,12-diamin oder 4,7,10-Trioxa-tridecan-1,13-diamin und/oder Aminoethyl-ethanolamin.

Als tertiäre Monoamine werden beispielsweise Trialkylamine, wie Trimethylamin, Triethylamin, Diethylbutylamin, Dimethylbenzylamin, N-Methylmorpholin, aber auch Akanolamine mit tertiären Aminogruppen wie Dimethylethanolamin, Dimethylisopropanolamin oder Methyldiisopropanolamin eingesetzt. Bevorzugt werden flüchtigte, tertiäre Trialkylamine, die keine isocyanatreaktiven Gruppen enthalten.

Die entstehenden Bindemitteldispersionen (Komponente A) sind lagerstabil und können mit weiteren Bindemitteln, z.B. Pastenharzen und gegebenenfalls weiteren mit den Bindemitteln A) nicht reaktiven Komponenten der Überzugsmittel versetzt werden.

Bei der Polyisocyanat-Komponente B) handelt es sich um beliebige organische Polyisocyanate (z.B. Diisocyanate) mit aliphatisch, cycloaliphatisch und/oder aromatisch gebundenen freien Isocyanatgruppen, die bei Raumtemperatur flüssig sind oder durch Zusatz eines oder mehrerer organischer Lösungsmittel verflüssigt sind. Die Polyisocyanatkomponente weist bei 23°C bevorzugt eine Viskosität von 1 bis 6000 mPa.s, vorzugsweise über 5 und unter 3000, besonders bevorzugt unter 500 mPa.s auf. Bevorzugt handelt es sich bei der Polyisocyanat-Komponente B) um Polyisocyanate oder Gemische mit ausschließlich aliphatisch und/oder cycloaliphatisch gebundenen Isocyanatgruppen, mit einer mittleren Funktionalität von 1,5 bis 5, bevorzugt 2 bis 3. Falls erforderlich können die Polyisocyanate in Abmischungen mit geringen Mengen an inerten Lösemitteln zum Einsatz gelangen, um die Viskosität in den genannten Bereich abzusenken. Die Menge derartiger Lösemittel soll jedoch so sein, daß in den erfindungsgemäß erhaltenen Beschichtungsmitteln maximal 20 % Lösemittel, bevorzugt unter 10 %, vorliegen. Bevorzugte Lösemittel sind solche, die nicht mit den Isocyanatgruppen reagieren, wie beispielsweise aromatische Kohlenwasserstoffe, Ester, Ether oder Ketone. Um eine gute Dispergierbarkeit der Polyisocyanate zu erzielen, kann eine geeignete niedrige Viskosität eingestellt werden. Hierzu dient auch das Lösen von hochviskosen oder festen Polyisocyanaten in wassermischbaren, organischen Lösemitteln, die nicht oder nur langsam mit Isocyanaten reagieren. Hierzu werden Alkohole mit sterisch gehinderten Alkoholgruppen, Ketoalkohole oder Alkoxyalkanole wie Butoxyethanol, Butyldiglykol, Methoxyisopropanol oder Diacetonalkohol bevorzugt. Mit ihnen wird kurz vor bis maximal 1 bis 2 Stunden vor der Verarbeitung ohne Erwärmen eine Polyisocyanatlösung hergestellt, die bei einem Festkörper über 40 Gew.-%, bevorzugt über 50 und unter 95 Gew.-%, eine Viskosität von 0,5 bis 2000 mPa.s, bevorzugt über 1 und unter 20 mPa.s hat. Durch dieses Verfahren wird eine feine Verteilung des Polyisocyanats im Überzugsmittel erreicht ohne Einbau von hydrophilen Gruppen in das Polyisocyanat. Außerdem sind auch hochviskose und/oder feste Polyisocyanate ohne Probleme zu verarbeiten.

Erfindungsgemäß geeignete Polyisocyanate sind beispielsweise die geläufigen sogenannten aromatischen Lackpolyisocyanate auf Basis von 2,4-Diisocyanatotoluol oder 4,4'-Diisocyanatodiphenylmethan oder die technischen Gemische mit ihren Isomeren oder Homologen. Besonders gut geeignet sind jedoch die Lackpolyisocyanate auf Basis aliphatischer Isocyanate. Beispiele für solche Polyisocyanate sind Hexamethylendiisocyanat, 1-Isocyanato-3,3,5-trimethyl-5-isocyanato-methylcyclohexan (IPDI) oder Bis(isocyanatocyclohexyl)methan und die an sich bekannten Biuret-, Allophanat-, Uretdion- oder Isocyanuratgruppen aufweisende Derivate dieser Isocyanate. Um das Verteilen der Komponente B) in der wäßrigen Dispersion zu erleichtern, kann das Polyisocyanat, mindestens anteilsweise, mit Polyethylenoxidalkoholen oder ionischen Gruppen modifiziert werden.

Für den erfindungsgemäßen Einsatz als Komponente B) werden zumindest anteilweise besonders bevorzugt sterisch behinderte Polyisocyanate verwendet. In diesen sind z.B. alpha-ständige zu den NCO-Gruppen lineare oder verzweigte Substituenten vorhanden. Es handelt sich dabei beispielsweise um Polyisocyanate, z.B. um Diisocyanate auf der Basis aromatischer oder alicyclischer Ringe oder linearer oder verzweigter Kohlenstoffketten mit 1 bis 12 Kohlenstoffatomen.

Beispiele hierfür sind 1,1,6,6-Tetramethylhexamethylendiisocyanat, 1,1,5-Dibutylpentamethylendiisocyanat, p- oder m-Tetramethylxylylendiisocyanat, 3(4)-Isocyanatomethyl-1-methylcyclohexylisocyanat und/oder die entsprechend hydrierten Homologen.

Diese Isocyanate können ebenfalls in geeigneter Weise zu höherfunktionellen Verbindungen umgesetzt sein, beispielsweise durch Reaktion mit Polyolen oder durch Umsetzung mit Wasser. Eine Gruppe geeigneter aliphatischer Polyisocyanate wird durch selektive Reaktion silylierter Polyalkohole mit Polyisocyanaten hergestellt, wie beispielsweise das Esterisocyanat auf Basis von Hexandiisocyanat und Pentaerythrit. Sie weisen besonders günstige niedrige Viskositäten auf.

Die Polyisocyanat-Komponente B) kann auch aus beliebigen Mischungen der beispielhaft genannten Di- oder Polyisocyanate bestehen, wobei beispielsweise die Mischung bevorzugt aus reaktiveren und sterisch behinderten Polyisocyanaten sowie aus zwei- und höherfunktionellen Polyisocyanaten bestehen kann. Als vorteilhaft hat sich eine hydrophobe Modifizierung mit langkettigen Fettalkoholen erwiesen.

Weiterhin können die erfindungsgemäß bereitgestellten Überzugsmittel übliche lacktechnische Additive enthalten, beispielsweise rheologiebeeinflussende Mittel, wie hochdisperse Kieselsäure, Schichtsilikate oder polymere Harnstoffverbindungen; Verdicker, beispielsweise wasserlösliche Celluloseether sowie synthetische Polymere mit ionischen und/oder assoziativ wirkenden Gruppen wie Poly(meth)acrylsäure, Polyvinylalkohol, Poly(meth)acrylamid, Polyvinylpyrrolidon oder Polyurethanharzen, oder auch hydrophob modifizierte ethoxylierte Urethane oder Poly(meth)acrylate. Weitere Beispiele sind Antiabsetzmittel, Verlaufsmittel, Lichtschutzmittel, Antischaummittel, wie beispielswiese silikonhaltige Verbindungen; Netzmittel, sowie haftvermittelnde Substanzen. Unter Netzmittel werden z.B. auch bekannte Pastenharze verstanden, wie sie z.B. in der DE-A-40 00 889 beschrieben sind, die zum besseren Dispergieren und Vermahlen von Pigmenten und Füllstoffen eingesetzt werden können. Zum Beschleunigen der Härtung können Katalysatoren eingesetzt werden, es wird jedoch bevorzugt beispielsweise durch thermische Energie, ohne Einsatz eines Katalysators zu härten.

Solche Additive sind bevorzugt in der Bindemittelkomponente a) enthalten. Es ist aber auch möglich zumindest Teile davon in Komponente b) einzuarbeiten, solange keine reaktiven Gruppen vorhanden sind.

Als in geringen Mengen gegebenenfalls vorhandene Lösungsmittel sind übliche lacktechnische Lösungsmittel geeignet, diese können von der Herstellung der Bindemittel stammen oder sie werden separat zugegeben.

Beispiele für solche Lösungsmittel sind ein- oder mehrwertige Alkohole, Glykolether oder -ester, Glykole, Ketone und/oder aromatische oder aliphatische Kohlenwasserstoffe. Es ist auch möglich wäßrige, lösungsmittelfreie Systeme herzustellen.

Als gegebenenfalls vorhandene Pigmente können übliche anorganische und/oder organische Buntpigmente und/oder Effektpigmente eingesetzt werden, wie z.B. Metallic-, Perlglanz- oder Interferenz-Pigmente. Die Menge beträgt beispielsweise zwischen 0,5 bis 15 Gew.-% bezogen auf das Überzugsmittel. Die Metallpigmente wie Al-Bronzen können auch zusammen mit einem oder mehreren weiteren nicht Metallic-Pigmenten oder Farbstoffen, z.B. Mikrotitandioxid, eingesetzt werden.

Beispiele für verwendbare bekannte farbgebende transparente oder deckende organische oder anorganische Pigmente sind Chinacridone, Perylene, Phthalocyanine, Indanthrene, Isoindoline und/oder halogenierte Thioindigopigmente. Beispiele für anorganische Pigmente sind Ruß, Titandioxid Chromoxide, Bleichromate oder Eisenoxidpigmente oder transparente Pigmente, gegebenenfalls können auch Füllstoffe wie Kieselsäure, Bariumsulfat, Talkum oder Schichtsilikat zugesetzt werden. Mit diesen Farbpigmenten werden Füller und Grundierungen und bevorzugt Uni-Basislacke hergestellt.

Die Herstellung der gebrauchsfertigen Überzugsmittel erfolgt kurz vor dem Verarbeiten durch einfaches Vermischen der Komponenten A) und B) bei Raumtemperatur. Dabei kann die Polyisocyanat-Komponente B) in eine neutralisierte, konzentrierte oder verdünnte wäßrige Polymerdispersion zugegeben werden. Das in Wasser gelöste bzw. dispergierte Polymerisat übernimmt dabei die Funktion eines Emulgators. Durch Zusatz von weiterem Wasser kann eine geeignete Verarbeitungsviskosität eingestellt werden. Die Menge der Polyisocyanat-Komponente wird dabei so bemessen, daß bevorzugt ein Verhältnis von NCO zu isocyanatreaktiven Gruppen, z.B. OH-Gruppen, von 0,5 : 1 bis 5 : 1, vorzugsweise 0,8 : 1 bis 2 : 1 erhalten wird, mengenmäßig werden bevorzugt 40 bis 95 Gew.-% (besonders bevorzugt 50 bis 90 Gew.-%) der Komponente A) mit 60 bis 5 Gew.-% (besonders bevorzugt 50 bis 10 Gew.-%) der Komponente B), jeweils bezogen auf den Harzfestkörpergehalt, miteinander vermischt.

Durch die erfindungsgemäße Arbeitsweise mit den speziellen Neutralisationsmitteln für die sauren Gruppen der Bindemitteldispersion, wird eine gute Vermischbarkeit der Komponente A) und B) erreicht. Weiterhin resultiert eine ausreichend lange Topfzeit, d.h. die Reaktion der Isocyanatgruppen mit den funktionellen Gruppen des Bindemittels wird in der Wasserphase verzögert. Werden die Überzugsmittel jedoch getrocknet, tritt eine schnelle und sichere Reaktion ein. Es ist durch die erfindungsgemäße Arbeitsweise möglich mit geringeren Isocyanatüberschüssen zu arbeiten, weil Nebenreaktionen der Isocyanatgruppen mit dem Wasser eingeschränkt werden.

Aus den Bindemitteln können wäßrige Überzugsmittel, beispielsweise für nicht-pigmentierte Klarlacke oder pigmentierte Basisschichten, Füller, Steinschlagschutzschichten oder Decklacke, hergestellt werden. Dabei können Pigmente, Additive und weitere Bindemittel dem jeweiligen Verwendungszweck angepaßt werden. Besonders geeignet sind die Bindemittel für die Herstellung von wäßrigen Basislacken. Bei Mehrschichtlackierungen wird durch die Verwendung der erfindungsgemäßen Überzugsmittel eine besonders gute Haftung zu Füller- und Decklackschichten erreicht.

Die erfindungsgemäßen Überzugsmittel können nach bekannten Methoden appliziert werden, z.B. bevorzugt durch Spritzen. Die erhaltenen Filme können bei niedrigen Temperaturen vernetzt werden, beispielsweise bei Temperaturen von Raumtemperatur bis zu 80°C, bevorzugt unter 60°C. Selbstverständlich ist es jedoch auch möglich, bei höheren Temperaturen, beispielsweise bis zu 150°C zu härten. Dies kann insbesondere kurzfristig erfolgen. Auf diese Weise sind die erfindungsgemäßen Überzugsmittel für die Lackierung von temperaturempfindlichen Substraten geeignet. Beispiele für empfindliche Substrate sind Kunststoffe, wie Polyurethane, Polycarbonate oder Polyolefine. Geeignet sind selbstverständlich auch andere Substrate, wie Metallsubstrate, insbesondere die in der Automobilindustrie bekannten Substrate, z.B. Eisen, Aluminium, Magnesium oder Legierungen davon. Die zu lackierenden Substrate können auch vorher schon beschichtet worden sein, beispielsweise mit Grundierungen oder Füller.

Es können Einschichtlackierungen oder Mehrschichtlackierungen hergestellt werden. Dabei ist es bevorzugt, daß bei einer Verwendung der erfindungsgemäßen wäßrigen Überzugsmittel als Basislacke für Mehrschichtlackierungen mit wäßrigen Klarlacken oder Pulverklarlacken überbeschichtet wird.

Im folgenden wird die Erfindung durch Ausführungsbeispiele näher erläutert.

### Beispiel 1:

### Herstellung eines Bindemittels:

### a) Herstellung eines Basisharzes

In einem 6-l-Reaktionskolben, ausgerüstet mit Rückflußkühler, Rührer, Thermometer und Wasserauskreiser, werden folgende Bestandteile miteinander vermischt:

| | |
|---|---|
| Trimethylolpropan | 1610,0 g |
| Kokosfettsäure | 1354,0 g |
| Hexahydrophthalsäureanhydrid | 1143,0 g |
| Xylol | 170,0 g |

Das Reaktionsgemisch wird unter Abdestillation von Wasser so lange bis auf ca. 230°C erhitzt, bis eine Säurezahl von weniger als 2 mg KOH/g erreicht ist.

### b) Herstellung eines Präaddukts

In einem 4-l-Reaktionsgefäß, ausgerüstet mit Rückflußkühler, Rührer und Thermometer werden folgende Bestandteile miteinander vermischt:

| | |
|---|---|
| Aceton | 1100,0 g |
| Dimethylolpropionsäure | 212,5 g |
| Isophorondiisocyanat | 704,0 g |

Das Reaktionsgemisch wird so lange bei 60°C gerührt, bis eine klare Lösung entsteht.

### c) Herstellung einer wäßrigen Harzdispersion

In einem 4-l-Reaktionskolben, ausgerüstet mit Rückflußkühler, Rührer und Thermometer werden 500,0 g des unter a) erhaltenen Basisharzes und 300,0 g des unter b) erhaltenen Präaddukts miteinander vermischt. Basisharz und Präaddukt werden unter Rühren bei 60°C so lange umgesetzt, bis der NCO-Gehalt geringer als 0,2 % ist. Dann wird unter intensivem Rühren ein Gemisch aus 12,0 g Dimethylethanolamin und 4,5 g Isophorondiamin zugesetzt und danach werden 1000,0 g vollentsalztes Wasser zugegeben. Die Temperatur wird nun auf 75°C erhöht und das Aceton abdestilliert. Das vollständige Entfernen des Acetons wird durch das Anlegen von Vakuum gegen Ende der Destillation gewährleistet.

Man erhält eine transparente Bindemitteldispersion mit einem Festkörpergehalt von 38 Gew.-%, einer Säurezahl von 23 und einer OH-Zahl von 130 und einem Amingehalt von 30 mEqu/100 g Festharz.

### Beispiel 2

### Herstellung eines wasserverdünnbaren Bindemittels für 2K-OH/NCO-Lacke

Zu 200 g der in Beispiel erhaltenen wäßrigen Bindemitteldispersion wird eine Lösung von 50 g eines handelsüblichen aliphatischen Polyisocyanats mit einem NCO-Gehalt von 22 Gew.-%, gelöst in 25 g Butoxyethanol gefügt. Es wird unter Rühren homogenisiert. Es resultiert eine Dispersion mit einer Topfzeit von 4 Stunden. Die erhaltene Dispersion wurde durch Spritzen auf Prüfbleche aufgebracht. Bei Trocknung bei Raumtemperatur ließ sich feststellen, daß blasenfreie Überzüge bis zu Schichtdicken von über 100 µm Trockenfilmdicke erhalten werden konnten.

## Patentansprüche

1. Verfahren zur Herstellung von wäßrigen Überzugsmitteln durch Vermischen einer wäßrigen Dispersion eines oder mehrerer wasserdispergierbarer oder wasserlöslicher Bindemittel, die gegenüber Isocyanat reaktive Gruppen enthalten, mit einem oder mehreren flüssigen oder durch Zusatz organischer Lösemittel in flüssiger Form vorliegenden Polyisocyanaten, sowie gegebenenfalls Pigmenten, Füllstoffen und/ oder lacküblichen Additiven, **dadurch gekennzeichnet,** daß man eine wäßrige Dispersion eines oder mehrerer Bindemittel mit einem Zahlenmittel der Molmasse (Mn) von 1000 bis 100000, gegenüber Isocyanat reaktiven Gruppen entsprechend einer OH-Zahl von 20 bis 250 und einer Säurezahl von 10 bis 100, deren Säurefunktionen zumindest teilweise durch ein oder mehrere Polyamine mit primären und/oder sekundären Aminogruppen im Gemisch mit einem oder mehreren tertiären Monoaminen neutralisiert sind, verwendet und in dieser Dispersion das flüssige oder in flüssiger Form vorliegende Polyisocyanat kurz vor der Verarbeitung der Überzugsmittel dispergiert.

2. Wäßriges Überzugsmittel, erhalten durch Vermischen einer wäßrigen Dispersion eines oder mehrerer wasserdispergierbarer oder wasserlöslicher Bindemittel die gegenüber Isocyanat reaktive Gruppen enthalten, mit einem oder mehreren flüssigen oder durch Zusatz organischer Lösemittel in flüssiger Form vorliegenden Polyisocyanaten, sowie gegebenenfalls Pigmenten, Füllstoffen und/oder lacküblichen Additiven, wobei man eine wäßrige Dispersion eines oder mehrerer Bindemittel mit einem Zahlenmittel der Molmasse (Mn) von 1000 bis 100000, gegenüber Isocyanat reaktiven Gruppen entsprechend einer OH-Zahl von 20 bis 250 und einer Säurezahl von 10 bis 100, deren Säurefunktionen zumindest teilweise durch ein oder mehrere Polyamine mit primären und/oder sekundären Aminogruppen im Gemisch mit einem oder mehreren tertiären Monoaminen neutralisiert sind, verwendet und in dieser Dispersion das flüssige oder in flüssiger Form vorliegende Polyisocyanat kurz vor der Verarbeitung des Überzugsmittels dispergiert.

3. Verfahren oder Überzugsmittel nach einem der vorhergehenden Ansprüche, dadurch gekennzeichnet, daß man Bindemittel mit einer Säurezahl von 20 bis 60 einsetzt.

4. Verfahren oder Überzugsmittel nach einem der vorhergehenden Ansprüche, dadurch gekennzeichnet, daß man Bindemittel einsetzt, die neben Säurefunktionen hydrophile Gruppen mit 1 bis 150 mEqu Ethylenoxideinheiten pro 100 g Harzfestkörper, aufweisen.

5. Verfahren oder Überzugsmittel nach einem der vorhergehenden Ansprüche, dadurch gekennzeichnet, daß die zur Neutralisation eingesetzten Polyamine in einer Menge von 5 bis 25 mEqu und die tertiären Monoamine in einer Menge von 10 bis 45 mEqu, jeweils bezogen auf 100 g Festharz eingesetzt werden, wobei die absolute Menge der mEqu an tertiärem Amin jeweils über der des Polyamins liegt.

6. Verwendung der wäßrigen Überzugsmittel nach einem der Ansprüche 2 oder 5 bei der Herstellung von Mehrschichtlackierungen.

7. Verwendung der wäßrigen Überzugsmittel nach einem der Ansprüche 2 oder 5 bei der Lackierung von temperaturempfindlichen Substraten, bei Trocknungstemperaturen von 25 bis 80°C.

## Claims

1. A process for producing aqueous coating media by mixing an aqueous dispersion of one or more water-dispersible or water-soluble binder vehicles, which contain groups which are reactive towards isocyanate, with one or more liquid polyisocyanates or polyisocyanates which are present in liquid form due to the addition of organic solvents, and optionally with pigments, extenders and/or customary lacquer additives, **characterised in that** an aqueous dispersion is used of one or more binder vehicles which have a number average molecular weight (Mn) of 1000 to 100,000, which contain groups which are reactive towards isocyanate corresponding to an OH number of 20 to 250, and which have an acid number of 10 to 100, the acid functions of which are at least partially neutralised by one or more polyamines containing primary and/or secondary amino groups in admixture with one or more tertiary monoamines, and the liquid polyisocyanate or the polyisocyanate which is present in liquid form is dispersed in this dispersion shortly before processing the coating media.

2. An aqueous coating medium, obtained by mixing an aqueous dispersion of one or more water-dispersible or water-soluble binder vehicles, which contain groups which are reactive towards isocyanate, with one or more liquid polyisocyanates or polyisocyanates which are present in liquid form due to the addition of organic solvents, and optionally with pigments, extenders and/or customary lacquer additives, wherein an aqueous dispersion is used of one or more binder vehicles which have a number average molecular weight (Mn) of 1000 to 100,000 and which contain groups which are reactive towards isocyanate corresponding to an OH number of 20 to 250, and which have an acid number of 10 to 100, the acid functions of which are at least partially neutralised by one or more polyamines containing primary and/or secondary amino groups in admixture with one or more tertiary moncamines, and the liquid polyisocyanate or the polyisocyanate which is present in liquid form is dispersed in this dispersion shortly before processing the coating medium.

3. A process or coating medium according to either one of the preceding claims, characterised in that binder vehicles are used which have an acid number of 20 to 60.

4. A process or coating medium according to any one of the preceding claims, characterised in that binder vehicles are used which in addition to acid functions contain hydrophilic groups comprising 1 to 150 milliequivalents of ethylene oxide units per 100 g resin solids.

5. A process or coating medium according to any one of the preceding claims, characterised in that the polyamines used for neutralisation are employed in an amount of 5 to 25 milliequivalents and the tertiary monoamines are employed in an amount of 10 to 45 milliequivalents, with respect to 100 g solid resin in each case, wherein the absolute amount of milliequivalents of tertiary amine is greater than that of the polyamine in each case.

6. The use of the aqueous coating media according to either one of claims 2 or 5 for the production of multi-layer coatings.

7. The use of the aqueous coating media according to either one of claims 2 or 5 for the coating of temperature-sensitive substrates, with drying temperatures of 25 to 80°C.

## Revendications

1. Procédé de préparation de produits de revêtement aqueux par mélange d'une dispersion aqueuse d'un ou plusieurs liants dispersables ou solubles dans l'eau et contenant des groupes réactifs avec les isocyanates, avec un ou plusieurs polyisocyanates liquides ou liquéfiés par addition de solvants organiques, et le cas échéant des pigments, des matières de charge et/ou des additifs usuels pour peintures et vernis, caractérisé en ce que l'on utilise une dispersion aqueuse d'un ou plusieurs liants ayant une masse moléculaire moyenne, moyenne en nombre (Mn) de 1000 à 100 000, contenant des groupes réactifs avec les isocyanates en quantité correspondant à un indice d'OH de 20 à 250 et ayant un indice d'acide de 10 à 100, dont les fonctions acides sont neutralisées en partie au moins par une ou plusieurs polyamines à groupes amino primaires et/ou secondaires en mélange avec une ou plusieurs monoamines tertiaires et en ce que, dans cette dispersion, on disperse le polyisocyanate liquide ou liquéfié peu avant l'application du produit de revêtement.

2. Produit de revêtement aqueux obtenu par mélange d'une dispersion aqueuse d'un ou plusieurs liants dispersables ou solubles dans l'eau qui contiennent des groupes réactifs avec les isocyanates, avec un ou plusieurs polyisocyanates liquides ou liquéfiés par addition de solvant organique, et le cas échéant des pigments, des matières de charge et/ou des additifs usuels pour peintures et vernis, pour lequel on utilise une dispersion aqueuse d'un ou plusieurs liants ayant une masse moléculaire moyenne, moyenne en nombre (Mn) de 1000 à 100 000, contenant des groupes réactifs avec les isocyanates en quantité correspondant à un indice d'OH de 20 à 250, et ayant un indice d'acide de 6 à 100, dont les fonctions acides sont neutralisées en partie au moins par une ou plusieurs polyamines à groupes amino primaires et/ou secondaires en mélange avec une ou plusieurs monoamines tertiaires, et dans cette dispersion, peu avant l'application du produit de revêtement, on disperse le polyisocyanate liquide ou liquéfié.

3. Procédé ou produit de revêtement selon une des revendications qui précèdent, caractérisé en ce que l'on utilise des liants ayant un indice d'acide de 20 à 60.

4. Procédé ou produit de revêtement selon une des revendications qui précèdent, caractérisé en ce que l'on utilise des liants qui, en plus des fonctions acides, contiennent des groupes hydrophiles en proportions de 1 à 150 méq. de motifs d'oxyde d'éthylène pour 100 g de résines solides.

5. Procédé ou produit de revêtement selon une des revendications qui précèdent, caractérisé en ce que les polyamines utilisées pour la neutralisation sont mises en oeuvre en quantité de 5 à 25 méq. et les monoamines tertiaires en quantité de 10 à 45 méq., dans les deux cas pour 100 g de résines solides, la quantité absolue des méq. d'amines tertiaires étant supérieure dans tous les cas à celle des polyamines.

6. Utilisation des produits de revêtement aqueux selon l'une des revendications 2 ou 5 pour l'application de revêtement à plusieurs couches.

7. Utilisation des produits de revêtement aqueux selon une des revendications 2 ou 5 pour le revêtement de supports sensibles à la température, avec des températures de séchage de 25 à 80°C.
